# EUROPEAN PATENT APPLICATION

(11) **EP 4 328 829 A1**
(43) Date of publication of application: **28.02.2024**
(21) Application number: 22191760.2
(22) Date of filing: 23.08.2022
(51) Int. Cl.: G06Q 10/10

(54) **COLLABORATIVE CALCULATION**

(71) Applicant: Tax Systems Limited, Staines-Upon-Thames TW18 4BP (GB)
(72) Inventor: CAPES, Sean, Staines-Upon-Thames, TW18 4BP (GB); KALYTA, Roman, Staines-Upon-Thames, TW18 4BP (GB); HONCHAR, Yurii, Staines-Upon-Thames, TW18 4BP (GB); MARFUT, Oleksandr, Staines-Upon-Thames, TW18 4BP (GB)
(74) Representative: EIP

(57) **Abstract**

A computer-implemented method includes providing a user interface to each of a plurality of client devices including a respective view of at least part of a collaborative calculation and functionality to determine values associated with the collaborative calculation, the respective view depending on a calculation structure. The method includes receiving a first message at a calculation engine indicating values determined by a first client device, and responsive to the first message: processing the values in accordance with a set of rules to update a state of the collaborative calculation; storing data indicative of the updated state in a cache, and publishing a second message indicating the updating of the state. Responsive to the second message, the method includes signalling to the plurality of client devices to update data stored in the database to reflect the updated state.

## Description

### Technical Field

The present invention relates to facilitating a collaborative calculation between multiple remote devices. The invention has particular, but not exclusive, relevance to facilitating a calculation of corporation tax on behalf of a company.

### Background

Calculating how much corporation tax a company owes within a given tax period is a complex endeavour, particularly for large companies with many departments and many avenues of trading and/or investment. At least in the UK, the calculation involves complex tax rules which are liable to change over time, placing a significant burden on the company to achieve compliance with tax requirements, given that the cost of noncompliance may include financial penalties and/or reputational damage to the company.

For a given tax period, the corporation tax calculation must be documented and provided as a company tax return to the relevant government department. Different parts of the calculation may be performed by different tax or accountancy professionals, either internal or external to the company, and there may be interdependence between parts of the calculation worked on by different professionals. Data for the calculation may be stored in databases accessible to company employees, but in cases where external collaboration is required, data is typically transferred back and forth between parties manually, for example via spreadsheets attached to emails. As well as presenting security concerns, this approach presents major challenges for tracking the calculation workflow and ensuring up to date information is available to parties when needed in order to complete the calculation in a timely and accurate manner.

There is a need to provide a system to facilitate a collaborative calculation between a potentially large number of users which remedies the shortcomings discussed above.

### Summary

According to a first aspect of the present disclosure, there is provided a computer-implemented method of facilitating a collaborative calculation between a plurality of client devices. The method includes maintaining a database configured to store data indicative of a state of the collaborative calculation, the state including a calculation structure and values associated with the collaborative calculation. The method includes providing, to each of the plurality of client devices, a user interface comprising a respective view of at least part of the collaborative calculation and functionality to determine, based on user input, values associated with the collaborative calculation. The respective view of the collaborative calculation depends on the calculation structure. The method further includes, at a calculation engine coupled to the plurality of client devices via a messaging services: receiving a first message via the messaging service indicating one or more values determined by a first client device of the plurality of client devices; and responsive to receiving the first message: processing the one or more values in accordance with a set of rules to update the state of the collaborative calculation; storing, in a cache, data indicative of the updated state of the collaborative calculation; and publishing, via the messaging service, a second message indicating the updating of the state of the collaborative calculation. The method includes, responsive to the second message, signalling to the plurality of client devices to update the updated state of the collaborative calculation indicated by the data stored in the cache, and updating data stored in the database to reflect the updated state of the collaborative calculation.

The disclosed method enables users to work asynchronously on the collaborative calculation whilst maintaining a calculation state that is shared among all of the users. Providing a dedicated calculation engine ensures that a single, immutable set of rules is executed consistently for all parties involved in the collaborative calculation. By publishing data to a cache accessible by the client devices, updates to the state of the calculation are served to the users in near real-time, mitigating the risk of duplication of work or contradictory views being provided by users concurrently working on the collaborative calculation.

The updating of the state of the calculation may result in a change of the calculation structure. For example, the respective views may include a set of menu items depending on the calculation structure, and updating the state of the collaborative calculation may modify the set of menu items within the respective view. This may thereby ensure that only the parts of the collaborative calculation which are relevant in the context of the calculation state are accessible to users.

The messaging service may be arranged to queue a plurality of messages, including the first message, each indicating one or more updated values determined by a respective client device of the plurality of client devices. The calculation engine may then be configured to process the plurality of messages asynchronously in an order in which the messages are queued. Queueing messages in this way means that the state of the calculation will always be based on the most up to date information available, for example if a value is updated and then corrected.

For each of the plurality of client devices, the user interface may be arranged to execute arithmetic or logical statements to determine values associated with the collaborative calculation. Certain inputs provided by users may be used to derive input values for the calculation, for example through aggregation, though the unprocessed or unaggregated values may be immaterial to the state of the calculation. Providing the user interface with a local computation environment to execute such statements amounts to distributing the processing between computational resources so as to reduce lag at the client devices whilst also improving the performance and scalability of the server-side calculation by avoiding redundant computations.

The updating of data stored in the database may be responsive to a third message published by the calculation engine via the messaging service following the updating of the state of the collaborative calculation. Publishing a separate message for transferring data from the cache to the database decouples the timing of this action from the updating the respective views at the client devices, which may prevent lag and delays perceived at the client devices, for example if there is a delay in persisting data to the database. This may improve performance when large numbers of requests are performed. Nevertheless, in other examples a single command may be used to trigger the updating of respective views at the client devices and to persist data to the database.

The cache may be arranged to store a materialised view of data stored in the database, and storing the data indicative of the updated state of the collaborative calculation in the cache may include updating the materialised view. The updating of the current values stored in the database may be based on the materialised view. Generating a materialised view implements part of a command query responsibility segregation (CQRS) data pattern, and improves the scalability of the method with respect to a number of queries from user devices to update the respective views.

The calculation engine may be configured to identify the set of rules among a plurality of sets of rules based on data within the first message. The calculation engine may for example be instantiated in response to the first message, meaning that from a functional perspective the client devices can be agnostic to whether other parties have already started working on the calculation.

The calculation engine may be a first calculation engine, and the method may include receiving, from a second client device of the plurality of client devices, a request to prepare documentation of the collaborative calculation, and processing values determined by the plurality of client devices to generate the requested documentation of the collaborative calculation. The second calculation engine may be arranged to generate the documentation in a predefined format suitable for human or machine checking or auditing.

The method may include providing, to each of the plurality of client devices, logic to selectively update the respective view of the at least part of the collaborative calculation dependent on content of the signalling. The logic may for example enable the client devices to identify which parts of the collaborative calculation have been updated, and only update the corresponding parts of the respective view. In this way, redundant refreshing of the rendered view can be avoided, which may otherwise interfere with the functionality of the user interface.

According to a second aspect, there is provided a system arranged to facilitate a collaborative calculation between a plurality of client devices. The system includes a database configured to store data indicative of a state of the collaborative calculation, a cache, and one or more servers communicable with the plurality of client devices. The one or more servers are arranged to perform a method as described above.

According to a third aspect, there is provided a computer program, or a suite of computer programs, comprising instructions which, when executed by one or more computers, cause the one or more computers to carry out a method as described above.

Further features and advantages of the invention will become apparent from the following description of preferred embodiments of the invention, given by way of example only, which is made with reference to the accompanying drawings.

### Brief Description of the Drawings

Fig. 1 shows a system arranged to facilitate a collaborative calculation in accordance with examples.
Figs. 2A and 2B schematically show snapshots of a user interface in accordance with examples.
Fig. 3 is a flow diagram representing a method of facilitating a collaborative calculation, in accordance with examples.
Fig. 4 is a flow diagram representing a method of preparing and filing a documentation of a collaborative calculation, in accordance with examples.

### Detailed Description

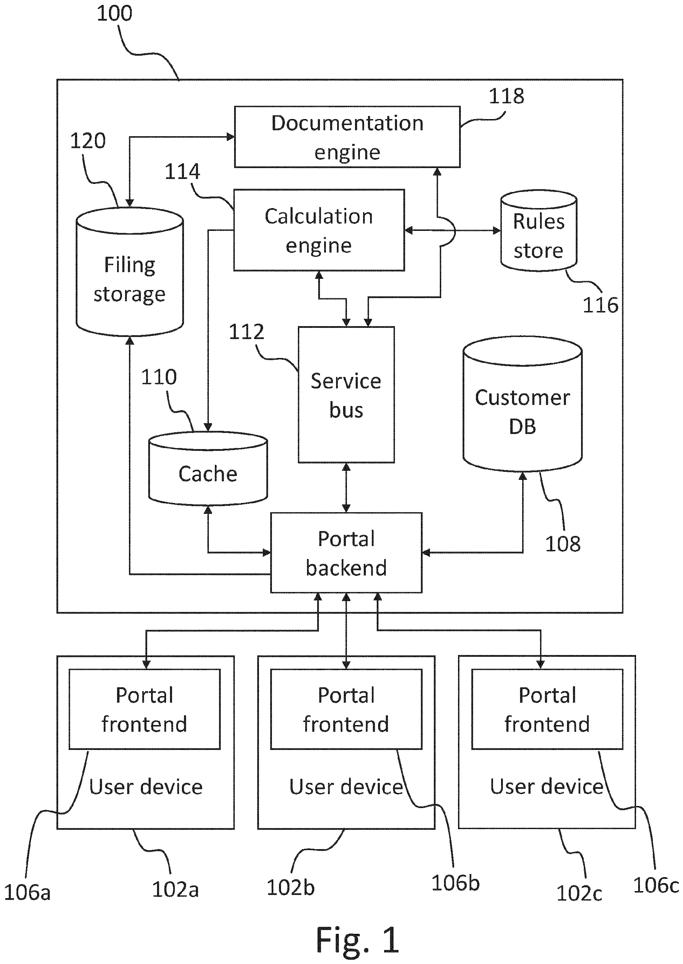

Fig. 1 shows functional components of a system 100 arranged to facilitate a collaborative calculation between multiple users. The users may be tax or accountancy professionals collaboratively performing a corporation tax calculation on behalf of a company. The users may be employees of the company or may be external to the company. A given user may have permission to interact with several different calculations via the system 100, for example corresponding to corporation tax calculations for several different companies. A given corporation tax calculation for a given company may be referred to as a period.

The collaborative calculation is governed by a set of calculation rules including logical and arithmetic statements and behaviour linking together values associated with the calculation. In the present disclosure, values which are connected to other values by the calculation rules are referred to as calculation values. The calculation rules may be representable as a tree or graph of interconnected nodes in which the nodes represent the calculation values and the edges represent logical and/or arithmetic statements connecting the calculation values. Some of the calculation values, typically located at leaf nodes of the graph, are input calculation values to be determined by user or automated input, whereas some calculation values logically depend on, and are derived from, other calculation values, as specified by the calculation rules. The tree or graph may have a root node associated with a final result of the calculation, for example a value for corporation tax due for a company within a given tax period. In the present disclosure, the state of the collaborative calculation refers to the calculation values and a calculation structure. The calculation structure depends on the calculation rules and determines which portions of the graph representing the calculation rules are needed to arrive at the final result of the calculation. For example, certain statements and/or calculation values may only be relevant under certain conditions, for example when a certain calculation values is entered or when a certain calculation value reaches a threshold value. Accordingly, the calculation structure may change as a result of calculation values or other information provided to the calculation engine. A complete set of input calculation values may be sufficient for determining the state of the collaborative calculation.

The system 100 in this example is implemented using cloud based component technology (Platform as a Service) on Microsoft Azure (RTM), and is arranged to provide cloud-based services to users of client devices 102, of which three client devices 102a, 102b, 102c are shown in the present example. Each of the client devices may be a desktop computer, laptop computer, tablet computer, or any other suitable user device capable of presenting a user interface and receiving user input via one or more input devices. Access to the system 100 may be controlled by a firewall (not shown) to protect components the system 100 against security threats originating from outside the system 100.

The system 100 hosts a web application (referred to hereafter as a portal) comprising a portal backend 104 and a portal frontend 106. The portal backend 106 includes server-side code, whereas instances of the portal frontend 106 include client-side code. The portal frontend 106 may be implemented within a web browser using client-side scripting, though in other examples the functionality of the portal frontend 106 may instead be implemented by a dedicated application running on the client devices 102.

Each instance of the portal frontend 106 presents a user interface to a user of one of the client devices 102. The user interface may include a view of at least part of the collaborative calculation. The view may include a hierarchically-arranged contents tree having selectable nodes or headings. Each node or heading may correspond to an individual page or statement, and each statement may be associated with one or more calculation values. A user may view a statement in a read-only "report" mode, or may view the statement in an editable "input" mode. Certain statements may be viewable and/or editable only by certain users in accordance with permissions, though some statements may be viewable and/or editable by all users.

When viewed in "input" mode, a statement may include editable fields in which data can be entered, such as values, strings, or other data types. The data input for a given statement may be used to determine calculation values. In some examples, a user may directly input calculation values. In other examples, a user may provide data which is aggregated or otherwise modified to generate a calculation value. Certain editable fields may for example accept logical statements such as SUM and AVERAGE (implemented using suitable libraries such as provided by math.js), which may then be executed by the portal frontend to determine associated calculation values.

Alternatively, or additionally, certain editable fields may accept free-format statements, which can provide additional functionality by enabling users to create and populate hierarchical structures for determining calculation values. The portal frontend 106 may for example provide a spreadsheet-like interface for inputting free-format statements, which may then be associated to a particular calculation value for example by providing a link or reference in the editable field associated with that calculation value. These free-format statements may be implemented using the client side scripting technology within the client side portal frontend. For example, a calculation value may represent trade of a particular type of asset by the company. A free-format statement may be used to break this into sales of a number of subgroups of the asset, which may be aggregated or combined in a user-defined manner via a free-format statement to arrive at the calculation value. In this way, a given calculation value may be associated with conditional logic provided by the user and optionally stored for later calculations, for example as a template. Such functionality may be implemented using client side script, for example as provided by Angular (RTM). In accordance with the present disclosure, logical statements and free-format statements appearing within statements at the portal frontend 106 are executed locally at the client devices 102 to minimise lag and thereby contribute to the responsiveness and useability of the user interface.

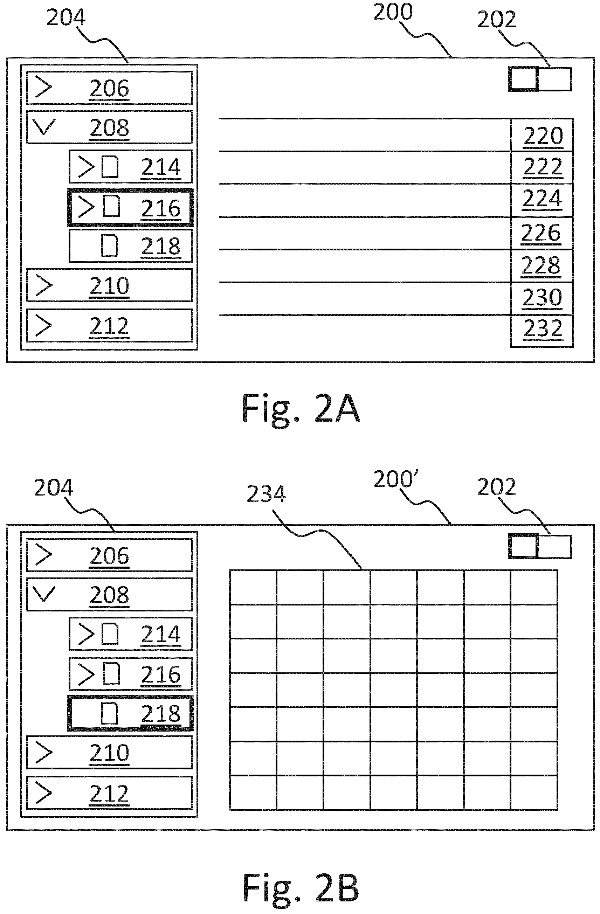

Fig. 2A shows schematically a first snapshot 200 of the user interface of the portal frontend 106. The user interface includes a switch 202 for toggling between report mode and input mode. In this example, a menu 204 represents the hierarchical contents tree, including menu items 206, 208, 210, 212. The menu items are expandable and collapsible, and in this case the menu item 208 has been expanded to reveal three sub-menu items 214, 216, 218. Each of the sub-menu items 214, 216, 218 represents a respective statement. The sub-menu items 214, 216 are expandable to reveal further items, which may include further statements such as statements for deriving values associated with the sub-menu items 216, 218. In this example, the sub-menu item 216 is selected, corresponding to a statement containing seven editable fields 220-232 representing respective calculation values. Calculation values may be entered directly into the editable fields 220-232, or may be derived for example by linking the editable fields to free-format statements. Fig. 2B shows schematically a second snapshot 200' of the user interface of the portal frontend 106. In this example, the sub-menu item 218 is selected, corresponding to a free-format statement for deriving one or more calculation values, such as one of the calculation values corresponding to the editable fields 220-232 in Fig. 2A. The free-format statement is represented by a spreadsheet 234 in which a user can enter values and/or logical statements to derive the necessary calculation values. The user interface may enable users to insert free-format statements into the contents tree menu, and optionally to save such free-format statements as templates for future calculations.

Calculation values submitted or determined at the portal frontend 106 are sent to the portal backend 104. Values provided within free-format or logical statements at the portal frontend 106 may not automatically be transmitted to the portal backend 104 as they are not needed to update the calculation state. However, the portal frontend 104 may include functionality to provide such values as additional documentation or evidence, in which case such documentation may be stored separately from the calculation values, along with metadata indicating the part(s) of the collaborative calculation to which the documentation relates.

The portal backend 104 is configured to manage data flow and messaging between components of the system 100 and the client devices 102. In particular, the portal backend 104 is provided with access to a customer database 108 and a cache 110, and is arranged to transmit and receive queries and commands over a messaging service bus 112. The customer database 108 may be configured for long-term storage of calculation values associated with one or more collaborative calculations, for example corporation tax calculations for one or more companies. The customer database 108 may use a relational structure or any other suitable data structure, and may be implemented as one or more temporal tables, enabling past states of a calculation to be viewed, for example for auditing or error correction purposes.

The cache 110 may be a distributed cache and/or may be implemented as a keyvalue data store such as a Redis data store, though in other implementations the cache 110 may be a local cache and/or may use other types of data structure. The cache 110 typically enables data to be accessed more rapidly than the customer database 108 but has a lower capacity and is used only when the collaborative calculation is active, meaning that users are currently accessing the collaborative calculation. The cache 110 may be arranged to store a materialised view of data stored in the customer database 108.

The service bus 112 is arranged to transmit commands and queries between components of the system 100, for example between the portal backend 104 and a calculation engine 114 to facilitate both reliability and scale in non-functional behaviour. The service bus 112 may be an asynchronous messaging service implementing a first-in-first-out queuing mechanism for messages. Examples of suitable messaging services are Azure Service Bus or Amazon Simple Queue Service (SQS).

The calculation engine 114 is arranged to carry out computations according to the calculation rules for a given collaborative calculation. In particular, the calculation engine 114 is arranged to process calculation values determined at the client devices 102 to update the calculation state according to the calculation rules. Updating the calculation state may include updating calculation values and/or updating the calculation structure. The calculation engine 114 may be an Azure function configured to remain active for a prolonged period of time after being instantiated, and accordingly may have associated memory for storing a current state of the collaborative calculation. Separate instances of calculation engines may be instantiated for different sets of calculation rules, and/or for different collaborative calculations (e.g. for different customers).

The calculation engine 114 may access rules data from a rules store 116 encoding the relevant set of calculation rules, along with static data defining the overall structure of the calculation. The rules store 116 may be implemented as any suitable object storage system, for example as provided by Azure Binary Large Object (BLOB) storage or Amazon Simple Storage Service (S3).

The calculation engine 114 may be subscribed to calculation request commands via the message service 112, indicating updated calculation values determined at the client devices 102. The calculation engine 114 processes updated calculation values sequentially according to the order in which they are submitted by the client devices 102. The calculation engine 114 in this example is arranged to output data indicative of the state of the collaborative calculation to the cache 110 as a materialised view. The materialised view may arrange the calculation values according to the statements in which they will be presented via the user interface of the portal frontend 106. The calculation engine 114 is arranged to publish a "calculation complete" command via the service bus 112 indicating that the materialised view in the cache 110 has been updated, and also to publish a command to persist data from the cache 110 to the customer database 108.

In response to the calculation complete command, the portal backend may signal to instances of the portal frontend 106, for example using SignalR or any other suitable asynchronous messaging function, to update their rendered views of the collaborative calculation. In response to receiving this signal, a given instance of the portal frontend 106 may query the materialised view stored in the cache 110 and update its rendered view of the collaborative calculation. This is to facilitate changes to, and the synchronisation of, distributed period computations.

The service bus 112 and the calculation engine 114 may implement a command query responsibility segregation (CQRS) pattern. For example, calculation request commands transmitted over the service bus 112 may serve as a command model for the calculation engine 114, whereas queries to the cache 110 serve as a query model. The CQRS pattern is advantageous for scalability of the calculation in terms of the number of users interacting with the calculation engine 114.

The system 100 in this example includes a documentation engine 118, which uses calculation engine instances arranged to re-use the same calculation rules as the calculation engine 114. Whereas the calculation engine 114 executes continually as users provide input to the collaborative calculation, and generates an output suitable for presentation via the user interface of the portal frontend 106, the documentation engine 118 is only required to execute once after the collaborative calculation has been completed and the necessary documentation, required for computation submission. The documentation engine 118 may for example be implemented using the node.js runtime environment. The documentation engine 118 has the function of generating documentation summarising a final state of the collaborative calculation in a suitable format for manual or automatic checking. For example, in the context of a corporation tax calculation, the documentation engine 118 may generate documentation in an Extensible Markup Language (XML) format suitable for submission as a company tax return. The documentation engine 118 in this example is arranged to retrieve all of the information necessary to determine the final state of the collaborative calculation (referred to hereafter as the calculation context), including all of the input calculation values, and to execute the calculation rules from scratch to determine all of the remaining calculation values of the final state. The documentation engine 118 generates the required documentation as its output and saves the documentation in filing storage 120, ready for submission via an e-filing interface. The filing storage 120 may be for example be Azure BLOB storage or Amazon S3 storage.

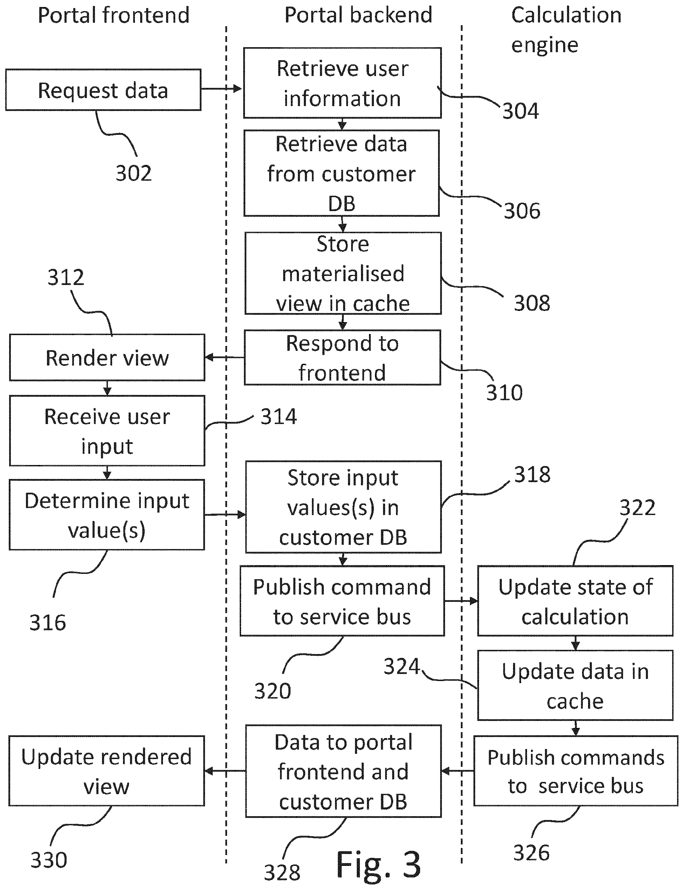

Fig. 3 shows an example of a method performed by the system 100 of Fig. 1. Prior to the method being performed, one of the client devices 102 may navigate to the portal using a web browser via the Domain Name System (DNS). Upon connecting to the portal, a user may be prompted to sign in using a set of credentials (provided the user does not already have a session underway). Upon successful authentication of the credentials using a suitable authentication scheme, such as single sign-on (SSO) or Azure Active Directory B2C, the portal frontend 106 requests, at 302, data associated with one or more collaborative calculations from the portal backend 104. In the context of corporation tax calculations, the requested data may be a list of periods accessible to the user of the client device 102, or may be data associated with a specified period.

The portal backend 106 may retrieve, at 304, information pertaining to the user of the client device 102. The information may include a list of customers (i.e. companies) to which the user has access, along with an identifiers and/or addresses of associated customer databases. The information may further include permissions/privileges/roles associated with the user in respect of the listed customers, for example as defined according to a role-based access control (RBAC) scheme.

Assuming the request at 304 was for information relating to a specified collaborative calculation, then having retrieved information identifying the customer database 108, the portal backend 106 retrieves, at 306, data associated with the collaborative calculation and stores a materialised view of the retrieved data in the cache 110. The retrieved data includes at least current calculation values for the collaborative calculation, some of which may be undefined or set to default values if they have not previously been input or calculated. A materialised view of the retrieved data is stored, at 308, in the cache 110, unless such a materialised view is already stored, for example due to another user accessing the collaborative calculation.

The portal backend 104 responds, at 310, to the request made at 302. The response may include at least part of the data stored in the materialised view in the cache 110. The portal frontend 106 renders, at 312, a view of at least part of the calculation for the user of the client device 102 (for example, part of the calculation to which the user has access). The rendered view may include a contents tree and a set of statements, which may be accessed in a report or input mode as described above. the data for the response may be read from the cache 110 after the materialised view has been stored, or may be read from the customer database 108 and transmitted to the portal frontend 106 concurrently with the materialised view being stored at 308.

The portal frontend 106 may receive, at 314, user input from the user of the user device 102. The user input may include specifying one or more calculation values, or inputting data from which one or more calculation values can be derived, for example using a logical statement or free-format statement. As explained above, the user interface enables such statements to be input and to be parsed and executed using local computing resources (for example within a browser) to. In response to receiving the user input, the portal frontend 106 may determine, at 316, one or more input calculation values. When the input calculation values have been calculated or derived, the portal frontend 106 may submit a request to the portal backend 104 to update the calculation values, for example automatically or in response to the user selecting a "submit" action within the user interface.

In response to receiving the request from the portal frontend 106, the portal backend 104 may store, at 318, the updated calculation values in a suitable table or tables of the customer database 108. For example, there may be a specific table for input calculation values. When the updated calculation values have been stored, the portal backend publishes, at 320, a calculation request command to the service bus 112 indicating the updating of the calculation values. In this example, the calculation request command includes the updated calculation values, along with additional information indicating, for example, which collaborative calculation the request applies to, and the applicable set of calculation rules. The calculation request message is queued behind any existing calculation request commands originating from any of the client devices 112.

The calculation engine 114 is subscribed to calculation request commands associated with the collaborative calculation. In case the calculation engine 114 has not yet been instantiated, the calculation engine 114 may be instantiated in response to the calculation request command. In this case, the calculation engine 115 may use data conveyed in the calculation request command to identify the applicable set of calculation rules, and to retrieve and deserialize binary files from the rules store 116 encoding the applicable set of calculation rules. When the calculation engine 114 has been instantiated and has accessed the necessary calculation rules and static data, the calculation engine 114 processes the calculation values indicated in the calculation request message and updates, at 322, the state of the collaborative calculation, which may involve recalculating at least some of the calculation values in accordance with the calculation rules. The updating of the state of the collaborative calculation may further include a change of the calculation structure. When the recalculation is completed, the calculation engine 114 updates, at 324, the materialised view in the cache 110.

When the materialised view has been updated, the calculation engine 114 publishes, at 326, a "calculation complete" message to the service bus 112, along with a command to persist data from the cache 110 to the customer database 108. The messages may be queued behind any existing messages of the same type.

The portal backend 104 is subscribed to calculation complete messages and persist data commands. Upon receiving the calculation complete message, the portal backend 104 sends a message to the portal frontend 106 on each of the user devices 102 to update its rendered view based on the updated materialised view in the cache 110. The message may be transmitted using SignalR or another suitable asynchronous messaging system. Upon receiving the message, the portal frontend 106 may update, at 330, the rendered view of at least part of the collaborative calculation if its view context represents part of the calculation that has been updated. Upon receiving the persist data command, the portal backend 104 may store data indicative of the updated state of the calculation in the customer database 108.

The method of Fig. 3 continues for multiple sets of updated input values determined at respective client devices 102, with the corresponding sequence of commands being queued in the service bus 112 and executed sequentially until the users of the client devices 102 have finished working on the collaborative calculation. At this point, the state of the collaborative calculation may be referred to as the final state of the collaborative calculation.

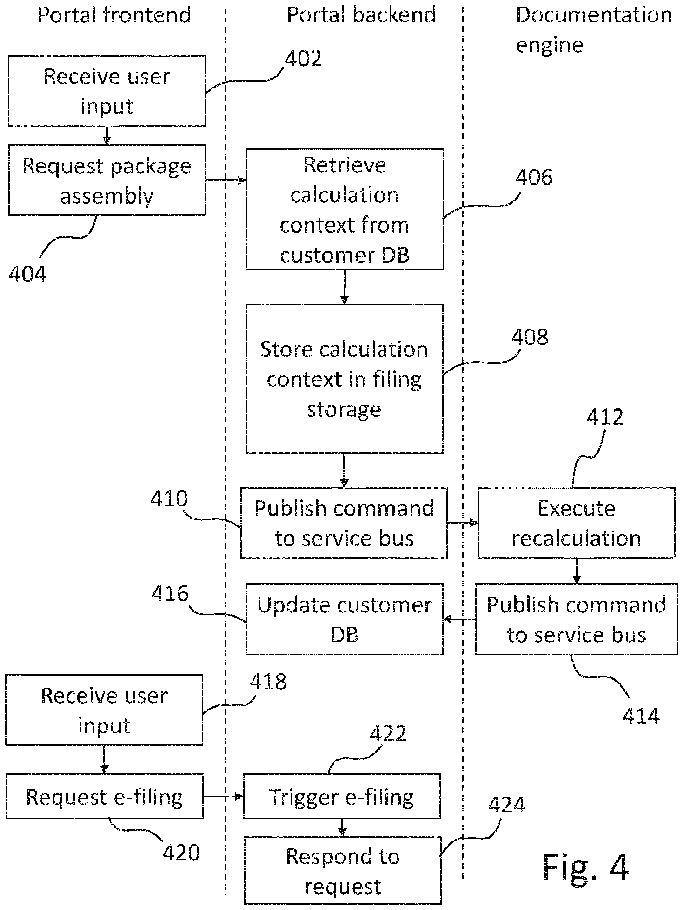

Fig. 4 shows an example of a further method performed by the system 100 of Fig. 1, after the users of the client devices 102 have finished working on the collaborative calculation and the state of the collaborative calculation is deemed to be the final state of the collaborative calculation. The method proceeds with the portal frontend 106 at one of the client devices 102 receiving, at 402, user input requesting the preparation of documentation summarising the final state of the collaborative calculation. The method continues with the portal frontend 106 requesting, at 404, the preparation of documentation from the portal backend 104. Upon receiving the request, the portal backend 104 retrieves, at 406, all data necessary to derive the final state of the collaborative calculation (referred to as the calculation context), including for example the relevant calculation rules from the rules store 116 and the input calculation values from the customer database 108, and stores the calculation context in filing storage 120 which is accessible by the documentation engine 118.

The portal backend 104 publishes, at 410, a command to the service bus 112 to start assembly of the documentation package. The documentation engine 118 is subscribed to such commands, and upon receiving the command, reads the calculation context from the filing storage 120, including all of the input calculation values, and executes the tax rules to recalculate, at 412, the calculation values of the final state of the collaborative calculation. The output of the execution is a package comprising one or more human-readable and/or machine-readable document files summarising the final state of the collaborative calculation, along with potentially other documents for example providing evidence associated with certain calculation values where required. The documentation engine 118 stores the assembled package in the filing storage 120.

When the documentation engine 118 has stored its output to the filing storage 120, the documentation engine 118 publishes, at 414, a command to the service bus 112 to update the customer database 416 to indicate that the package has been assembled. The portal frontend 106 may provide one or more of the client devices 102 with read-only access to the documentation generated by the documentation engine 118 via the portal frontend 106.

The portal frontend 106 may receive, at 418, user input requesting that the documentation generated by the documentation engine is filed via an e-filing interface. In the context of a corporation tax calculation, the e-filing interface may be provided the relevant government department and may be configured to accept files having a predetermined format, which in this case is the format of the documentation generated by the documentation engine 118. The portal frontend 106 passes, at 420, the request to the portal backend 422. The portal backend 104 triggers the e-filing, in which the documentation is retrieved from the filing storage 120 and submitted to the e-filing interface. Finally, the portal backend 104 responds, at 424, to the portal frontend 106 to report that the e-filing is complete.

The above embodiments are to be understood as illustrative examples of the invention. Further embodiments of the invention are envisaged. For example, the methods and systems described above could be used to facilitate any type of collaborative calculation, for example calculating costs associated with a project involving many parties, such as a complex building project. Furthermore, whilst the system described above is implemented within Microsoft Azure, it will be appreciated that the functionality of the system may be implemented using resources provided by a different cloud service provider, such as Amazon Web Services (RTM).

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method of facilitating a collaborative calculation between a plurality of client devices, comprising:
maintaining a database configured to store data indicative of a state of the collaborative calculation, the state comprising a calculation structure and values associated with the collaborative calculation;
providing, to each of the plurality of client devices a user interface comprising a respective view of at least part of the collaborative calculation and functionality to determine, based on user input, values associated with the collaborative calculation, the respective view depending on the calculation structure;
at a calculation engine coupled to the plurality of client devices via a messaging servi ce :
receiving, via the messaging service, a first message indicating one or more values determined by a first client device of the plurality of client devices; and
responsive to the first message:
processing the one or more values in accordance with a set of rules to update the state of the collaborative calculation;
storing, in a cache, data indicative of the updated state of the collaborative calculation; and
publishing, via the messaging service, a second message indicating the updating of the state of the collaborative calculation;
responsive to the second message, signalling to the plurality of client devices to update the respective views to reflect the updated state of the collaborative calculation indicated by the data stored in the cache; and
updating data stored in the database to reflect the updated state of the collaborative calculation.

2. The computer-implemented method of claim 1, wherein for each of the plurality of user devices:
the respective view comprises a set of menu items depending on the calculation structure; and
the updating of the state of the collaborative calculation modifies the set of menu items within the respective view.

3. The computer-implemented method of claim 1 or 2, wherein:
the messaging service is arranged to queue a plurality of messages, including the first message, each indicating one or more values updated at a respective client device of the plurality of client devices; and
the calculation engine is configured to process the plurality of messages asynchronously in an order in which the messages are queued.

4. The computer-implemented method of any preceding claim, wherein for each of the plurality of client devices, the user interface is arranged to execute arithmetic or logical statements to determine values associated with the collaborative calculation.

5. The computer-implemented method of any preceding claim, wherein the updating of data stored in the database is responsive to a third message published by the calculation engine via the messaging service following the updating of the state of the collaborative calculation.

6. The computer-implemented method of any preceding claim, wherein:
the cache is configured to store a materialised view of data stored in the database; and
storing the data indicative of the updated state of the collaborative calculation in the cache comprises updating the materialised view.

7. The computer-implemented method of claim 6, wherein the updating of the current values stored in the database is based on the materialised view.

8. The computer-implemented method of any preceding claim, wherein the calculation engine is configured to identify the set of rules among a plurality of sets of rules based on data within the first message.

9. The computer-implemented method of any preceding claim, wherein the calculation engine is a first calculation engine, the method comprising:
receiving, from a second client device of the plurality of client devices, a request to prepare documentation of the collaborative calculation; and
processing values determined by the plurality of client devices, using a second calculation engine, to generate the requested documentation of the collaborative calculation.

10. The computer-implemented method of any preceding claim, comprising providing, to each of the plurality of client devices, logic to selectively update the respective view of the at least part of the collaborative calculation dependent on said signalling.

11. The computer-implemented method of any preceding claim, wherein the collaborative calculation is a corporation tax calculation.

12. A system arranged to facilitate a collaborative calculation between a plurality of client devices, comprising:
a database configured to store data indicative of a state of the collaborative calculation, the state comprising a calculation structure and values associated with the collaborative calculation;
a cache; and
one or more servers communicable with the plurality of client devices, the one or more servers being arranged to perform the method of any of claims 1 to 11.

13. A computer program, or a suite of computer programs, comprising instructions which, when executed by one or more computers, cause the one or more computers to carry out the method of any of claims 1 to 11.
